# EUROPÄISCHE PATENTANMELDUNG

(11) **EP 3 333 658 A1**
(43) Veröffentlichungstag der Anmeldung: **13.06.2018**
(21) Anmeldenummer: 16203081.1
(22) Anmeldetag: 09.12.2016
(51) Int. Cl.: G05B 19/409, G05B 19/042

(54) **STEUERUNG ZUM SICHEREN STEUERN ZUMINDEST EINER MASCHINE**

(71) Anmelder: SICK AG, 79183 Waldkirch (DE)
(72) Erfinder: Saumer, Herr Markus, 77948 Friesenheim (DE)

(57) **Zusammenfassung**

Um eine intuitive Konfiguration einer Steuerung (S) bzw. einer Gesamtanlage zu ermöglichen, wird eine Steuerung (S) zum sicheren Steuern zumindest einer Maschine (R, St) zur Verfügung gestellt, mit einem Steuermodul (SM) zum Erzeugen von Ausgangssignalen in Abhängigkeit von Eingangssignalen, wobei die Eingangssignale von zumindest einem angeschlossenen Signalgeber bereitgestellt und die Ausgangssignale an die zumindest eine Maschine (R, St) kommuniziert werden, und wobei das Steuermodul (SM) ein Display (D, D1) zum Anzeigen von Informationen der Steuerung (S) aufweist, das derart in dem Steuermodul (SM) bewegbar gelagert ist, dass ein Bewegen des Displays (D, D1) gegenüber dem Steuermodul (SM) einer Eingabe an die Steuerung (S) entspricht.

## Beschreibung

Die Erfindung betrifft eine Steuerung zum sicheren Steuern zumindest einer Maschine nach Anspruch 1.

In der heutigen Automatisierungsindustrie wird eine Gesamtanlage aus einer Vielzahl von Modulen erstellt, wobei jedes Modul zumindest eine Steuerung und zumindest eine Maschine aufweist. Durch den modularen Aufbau der Anlage kann eine Änderung der Anlage einfach und zeitsparend durchgeführt werden.

Die Steuerung der Anlage steuert derart die Maschine, dass die Maschine ihre zugeordnete Aufgabe durchführt und gegebenenfalls mit einer anderen Maschine interagiert. Hierzu erhält die Steuerung Eingangssignale von angeschlossenen Signalgebern, die beispielsweise eine Umgebung der Maschine oder eine Position oder eine Bewegung der Maschine wiedergeben. Die Steuerung erzeugt Ausgangssignale, die die Maschine entsprechend ansteuert, und kommuniziert die Ausgangssignale an die Maschine.

Hierbei umfasst die Steuerung Konfigurationsdaten, die der Steuerung ermöglichen, die angeschlossenen Signalgeber und Maschine zu erkennen und diese in ihrer Funktion zu steuern. Diese Konfigurationsdaten können mittels eines externen Eingabegeräts, beispielsweise eines Computers, in die Steuerung implementiert werden.

Zusätzlich kann direkt an der Steuerung die Konfiguration durchgeführt werden. Hierzu weist die bekannte Steuerung Drehschalter oder ein Display und Cursortasten auf. Mittels der Drehschalter können beispielsweise Ein- und Ausgänge eines Eingangs- bzw. Ausgangsmoduls der Steuerung eingestellt werden, wobei an dem Eingangsmodul Signalgeber und an dem Ausgangsmodul die zu steuernde Maschine angeschlossen sind.

Informationen bzgl. der Konfiguration beispielsweise der Ein- und Ausgänge des Eingangs- bzw. Ausgangsmoduls können auch auf einem Display der Steuerung angezeigt werden, so dass ein Nutzer die Konfiguration mittels der Cursortasten auswählen und durchführen kann. Durch Drücken der Cursortasten kann der Nutzer die auf dem Display anzuzeigende Information bzgl. der Konfiguration auswählen und die Konfiguration bestätigen.

Diese bekannte Art der direkten Konfiguration der Steuerung ist für den Nutzer wenig intuitiv, da die Drehschalter bzw. die Verbindung zwischen der angezeigten Information auf dem Display und den Cursortasten nicht selbsterklärend sind.

Es ist daher eine Aufgabe der Erfindung, eine Steuerung zum sicheren Steuern einer Maschine zur Verfügung zu stellen, mit der eine intuitive Konfiguration der Steuerung möglich ist.

Die Aufgabe wird erfindungsgemäß gelöst durch eine Steuerung zum sicheren Steuern zumindest einer Maschine, mit einem Steuermodul zum Erzeugen von Ausgangssignalen in Abhängigkeit von Eingangssignalen, wobei die Eingangssignale von zumindest einem angeschlossenen Signalgeber bereitgestellt und die Ausgangssignale an die zumindest eine Maschine kommuniziert werden, und wobei das Steuermodul ein Display zum Anzeigen von Informationen der Steuerung aufweist, das derart in dem Steuermodul bewegbar gelagert ist, dass ein Bewegen des Displays gegenüber dem Steuermodul einer Eingabe an die Steuerung entspricht.

Gemäß einem bevorzugten Ausführungsbeispiel ist das Display federbelastet gelagert und gegenüber einem Gehäuse des Steuermoduls in einer Ausgangsposition gehalten. Hierdurch kann das Display vorteilhafterweise nach der Eingabe an die Steuerung durch Bewegen des Displays immer in die Ausgangsposition zurückkehren.

Gemäß einem weiteren bevorzugten Ausführungsbeispiel umfasst das Bewegen des Displays ein Drücken des Displays gegenüber dem Steuermodul und kehrt das Display in die ursprüngliche Position gegenüber dem Steuermodul bei einem Loslassen zurück.

Weiterhin umfasst gemäß einem weiteren bevorzugten Ausführungsbeispiel das Bewegen des Displays ein Kippen des Displays gegenüber dem Steuermodul. Vorteilhafterweise ist das Display gegenüber dem Steuermodul in neun Richtungen kipp- und drückbar.

Gemäß einem weiteren bevorzugten Ausführungsbeispiel sind unterschiedliche Eingabemöglichkeiten derart in dem Display angezeigt, so dass das Bewegen des Displays in Richtung der jeweiligen Eingabemöglichkeit durch Kippen bzw. Drücken des Displays eine Auswahlbestätigung der Eingabemöglichkeit repräsentiert. Beispielsweise können am linken und rechten Rand des Displays zwei Eingabemöglichkeiten, wie zum Beispiel *"Ablehnen"* und *"Zustimmen",* angezeigt werden und der Nutzer kann durch Drücken bzw. Kippen des Displays nach links oder nach rechts seine Auswahl der Eingabemöglichkeit bestätigen.

Gemäß einem weiteren bevorzugten Ausführungsbeispiel umfasst das Display eine Leuchtdioden-Anzeige oder eine Flüssigkristall-Anzeige.

Ferner ist vorteilhafterweise zumindest ein Erweiterungsmodul an dem Steuermodul mittels eines Busses anschließbar, wobei an dem Erweiterungsmodul zusätzliche Signalgeber und/oder Maschinen anschließbar sind. Hierdurch kann die Steuerung bei Bedarf einfach erweitert werden. Das Erweiterungsmodul weist ein weiteres bewegbar gelagertes Display auf, wobei insbesondere das Display des Erweiterungsmoduls dem Display des Steuerungsmoduls gleicht.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Fig. 1: eine schematische Darstellung einer erfindungsgemäßen Steuerung in einer Automatisierungsanlage, und
- Fig. 2: eine schematische perspektivische Detaildarstellung eines Ausführungsbeispiels der erfindungsgemäßen Steuerung.

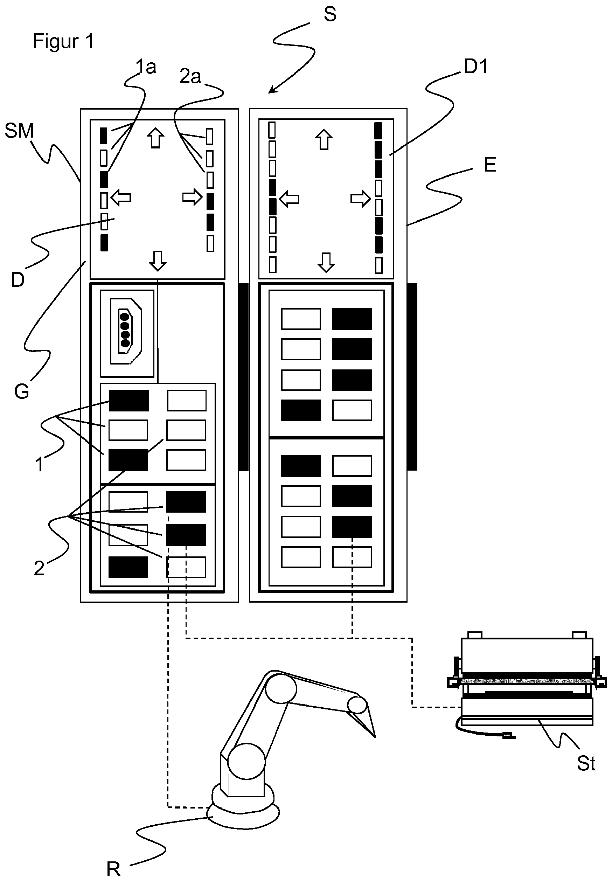

Die Figur 1 zeigt schematisch eine Automatisierungsanlage, die aus einer erfindungsgemäßen Steuerung S und aus zwei von der Steuerung S angesteuerten Maschinen aufgebaut ist. Die Steuerung S steuert die, beispielhaft als Roboterarm R und als Stanze St dargestellten, Maschinen an.

Die Steuerung S umfasst zumindest ein Steuermodul SM, an dem zumindest ein nicht dargestellter Signalgeber angeschlossen werden kann, so dass das Steuermodul SM Eingangssignale von dem Signalgeber empfängt. Die Eingangssignale werden von dem Steuermodul SM in entsprechende Ausgangssignale verarbeitet, mit denen die Steuerung S die Maschinen R und St sicher steuert. Hierzu kommuniziert das Steuermodul SM die Ausgangssignale an die Maschinen R und St.

Die Steuerung S kann mit zumindest einem zusätzlichen Erweiterungsmodul E erweitert werden, so dass die Gesamtanlage auf einfachste Art und Weise erweitert werden kann. Hierzu sind die zusätzlichen Erweiterungsmodule E mittels einer Busleitung mit der erfindungsgemäßen Steuerung S verbunden.

Das Steuermodul SM weist ein Display D auf, auf dem Informationen der Steuerung S angezeigt werden können. Die Informationen können beispielsweise die Konfigurationsinformationen des Steuermoduls SM über den Signalgeber und die Maschinen R und St wiedergeben und insbesondere an welchen Eingangs- und Ausgangsanschlüsse des Steuermoduls SM der Signalgeber und die Maschinen R und St angeschlossen sind. Vor allem bei einer Konfiguration der Steuerung S werden beispielsweise die Anschlüsse, die angeschlossenen Signalgeber bzw. Maschinen und Verbindungsoptionen der Automatisierungsanlage durch die Steuerung S angezeigt.

Hierzu ist das Display D des Steuermoduls SM erfindungsgemäß derart bewegbar gelagert, dass ein Bewegen des Displays D gegenüber dem Steuermodul SM einer Eingabe an die Steuerung S entspricht. Mit anderen Worten, das Display D der erfindungsgemäßen Steuerung S weist eine Funktionalität entsprechend eines Cursortasters bzw. Zustimmungstasters auf, so dass ein Nutzer bei der Konfiguration der Steuerung S mit dem Display D die Zuordnung der angezeigten Informationen und somit die Konfiguration intuitiv durchführen kann.

Das Display D ist federbelastet gelagert und gegenüber einem Gehäuse G des Steuermoduls SM in einer Ausgangsposition gehalten. Aus dieser Ausgangsposition des Displays D kann das Display D bewegt werden, wobei das Bewegen des Displays D ein Drücken des Displays D gegenüber dem Steuermodul SM umfasst und das Display D in die Ausgangsposition gegenüber dem Steuermodul SM bei einem Loslassen des Displays D automatisch zurückkehrt. Das Bewegen des Displays D kann insbesondere ein Kippen des Displays D gegenüber dem Steuermodul SM umfassen, bei dem der Nutzer auf die Seiten des Displays D drückt, so dass das Display D in dieser Richtung kippt.

Vorteilhafterweise ist das Display D gegenüber dem Steuermodul SM in neun Richtungen kipp- und drückbar, wobei bei jedem Kippen bzw. Drücken des Displays D ein elektrischer Kontakt in dem Steuermodul SM erstellt ist, der ein entsprechendes Funktionssignal dem Steuermodul SM bzw. der Steuerung S zur Verfügung stellt.

Mit anderen Worten, in dem Display D werden unterschiedliche Eingabemöglichkeiten für den Nutzer dargestellt, wie beispielsweise eine Zuordnung eines Eingangsanschlusses 1a des Steuermoduls SM zu einem Ausgangsanschluss 2a desselben. Die Anzeige auf dem Display D gibt die Anordnung der physikalischen Anschlüsse 1 und 2 des Steuermoduls SM bzw. des Erweiterungsmoduls E digital wieder. Der Nutzer kann durch Bewegen des Displays D in Richtung der jeweiligen Eingabemöglichkeit mittels Kippen bzw. Drücken des Displays D eine Auswahlbestätigung der Eingabemöglichkeit als Funktionssignal an das Steuermodul SM erstellen, so dass die Eingabe des Nutzers, in diesem Fall die Zuordnung des einen digital dargestellten Eingangsanschlusses 1a zu dem einen digital dargestellten Ausgangsanschluss 2a, in dem Steuermodul SM hinterlegt ist.

In dem dargestellten Ausführungsbeispiel in Figur 1 weist das Steuermodul SM sechs Eingangsanschlüsse 1 und sechs Ausgangsanschlüsse 2 auf, die unterschiedlich belegt sind. Die belegten Anschlüsse 1 und 2 sind als schwarze Kästen und die nicht belegten Anschlüsse 1 und 2 sind als weiße Kästen dargestellt. Diese physikalischen Einund Ausgangsanschlüsse 1 und 2 sind auf dem erfindungsgemäßen Display D in Form von dargestellten Ein- und Ausgangsanschlüssen 1a und 2a digital exakt wiedergegeben, so dass quasi ein Bild der physikalischen Ein- und Ausgangsanschlüsse 1 und 2 für den Nutzer sichtbar ist. Hierbei umfasst das Display D eine Leuchtdioden-Anzeige oder eine Flüssigkristall-Anzeige.

Bei der Konfiguration bzw. Zuordnung der Anschlüsse 1 und 2 des Steuermoduls SM drückt der Nutzer das Display D in die gewünschte Richtung, so dass gegenüber dem Steuermodul SM die in dieser Richtung dargestellte Information als ausgewählt und bestätigt gilt. Auf diese Art und Weise kann der Nutzer ganz intuitiv mittels des Displays D Konfigurationsdaten der Steuerung S auswählen und eingeben, ohne dabei separate Cursortasten bedienen zu müssen.

Wie dargestellt, weist das Erweiterungsmodul E ein weiteres bewegbar gelagertes Display D1 auf, das insbesondere dem Display D des Steuerungsmoduls SM gleicht. Hierdurch lässt sich die Konfiguration des Erweiterungsmoduls E auf die gleiche Art und Weise intuitiv durchführen.

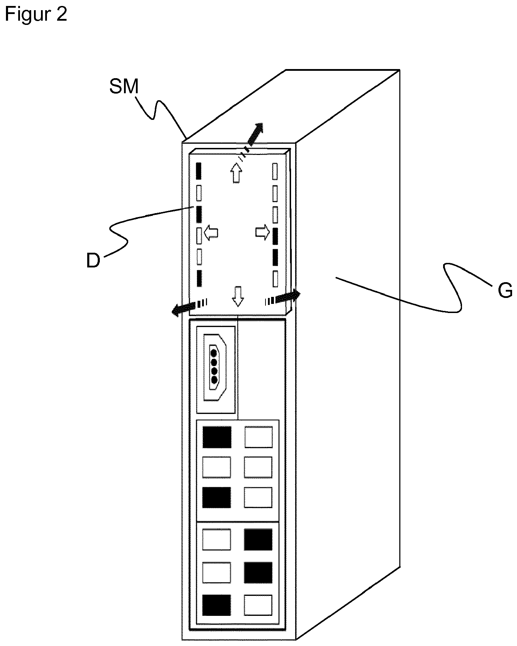

Die Figur 2 zeigt perspektivisch das Steuermodul SM mit dem erfindungsgemäßen Display D. Durch die schwarzen Pfeile ist angedeutet, wie beweglich das Display D gegenüber dem Gehäuse D des Steuermoduls SM gelagert ist. Insbesondere kann der Nutzer das Display D an den Ecken, an den Seiten und mittig drücken, wodurch das Display D insgesamt in neun Richtungen bewegbar ist. Hierbei kann in jede Richtung eine andere Eingabemöglichkeit hinterlegt sein.

### Bezugszeichenliste

- 1: Eingangsanschluss
- 1a: Digital dargestellter Eingangsanschluss
- 2: Ausgangsanschluss
- 2a: Digital dargestellter Ausgangsanschluss

- D, D1: Display
- E: Erweiterungsmodul
- G: Gehäuse
- R, St: Maschine (Roboterarm, Stanze)
- S: Steuerung
- SM: Steuermodul

## Patentansprüche

1. Steuerung (S) zum sicheren Steuern zumindest einer Maschine (R, St), mit einem Steuermodul (SM) zum Erzeugen von Ausgangssignalen in Abhängigkeit von Eingangssignalen, wobei die Eingangssignale von zumindest einem angeschlossenen Signalgeber bereitgestellt und die Ausgangssignale an die zumindest eine Maschine (R, St) kommuniziert werden, und
wobei das Steuermodul (SM) ein Display (D, D1) zum Anzeigen von Informationen der Steuerung (S) aufweist, das derart in dem Steuermodul (SM) bewegbar gelagert ist, dass ein Bewegen des Displays (D, D1) gegenüber dem Steuermodul (SM) einer Eingabe an die Steuerung (S) entspricht.

2. Steuerung (S) nach Anspruch 1, wobei das Display (D, D1) federbelastet gelagert und gegenüber einem Gehäuse (G) des Steuermoduls (SM) in einer Ausgangsposition gehalten ist.

3. Steuerung (S) nach Anspruch 2, wobei das Bewegen des Displays (D, D1) ein Drücken des Displays (D, D1) gegenüber dem Steuermodul (SM) umfasst und das Display (D, D1) in die Ausgangsposition gegenüber dem Steuermodul (SM) bei einem Loslassen zurückkehrt.

4. Steuerung (S) nach Anspruch 2 oder 3, wobei das Bewegen des Displays (D, D1) ein Kippen des Displays (D, D1) gegenüber dem Steuermodul (SM) umfasst.

5. Steuerung (S) nach einem der vorhergehenden Ansprüche, wobei das Display (D, D1) gegenüber dem Steuermodul (SM) in neun Richtungen kipp- und drückbar ist.

6. Steuerung (S) nach einem der vorhergehenden Ansprüche, wobei unterschiedliche Eingabemöglichkeiten derart in dem Display (D, D1) angezeigt sind, so dass das Bewegen des Displays (D, D1) in Richtung der jeweiligen Eingabemöglichkeit durch Kippen bzw. Drücken des Displays (D, D1) eine Auswahlbestätigung der Eingabemöglichkeit repräsentiert.

7. Steuerung (S) nach einem der vorhergehenden Ansprüche, wobei das Display (D, D1) eine Leuchtdioden-Anzeige oder eine Flüssigkristall-Anzeige umfasst.

8. Steuerung (S) nach einem der vorhergehenden Ansprüche, wobei zumindest ein Erweiterungsmodul (E) an dem Steuermodul (SM) mittels eines Busses anschließbar ist und an dem Erweiterungsmodul (E) zusätzliche Signalgeber und/oder Maschinen (R, St) anschließbar sind.

9. Steuerung (S) nach Anspruch 8, wobei das Erweiterungsmodul (E) ein weiteres bewegbar gelagertes Display (D1) aufweist.

10. Steuerung (S) nach Anspruch 9, wobei das Display (D1) des Erweiterungsmoduls (E) dem Display (D) des Steuerungsmoduls (SM) gleicht.
